Europäisches Patentamt

(19) European Patent Office

Office européen des brevets

(11) Publication number: **0 150 909**
**B1**

(12) **EUROPEAN PATENT SPECIFICATION**

(45) Date of publication of patent specification: **28.03.90**

(21) Application number: **85300073.5**

(22) Date of filing: **04.01.85**

(51) Int. Cl.⁵: **C 21 D 8/12**

(54) **Method of manufacturing grain-oriented silicon steel sheets.**

(30) Priority: **09.01.84 JP 728/84**

(43) Date of publication of application:
**07.08.85 Bulletin 85/32**

(45) Publication of the grant of the patent:
**28.03.90 Bulletin 90/13**

(84) Designated Contracting States:
**DE FR GB SE**

(56) References cited:
**DE-A-2 522 727    GB-A-1 281 985**
**DE-A-2 656 161    GB-A-2 066 854**
**GB-A-1 244 439    US-A-4 202 711**

**REVUE METALLURGIE-CIT, Paris, vol. 77, no. 10,
octobre 1980, pages 819-826; LAMBERTERIE et
al.: "Four prototype à induction pour le
réchauffage des brames d'acier avant laminage"**

**STAHL UND EISEN, Düsseldorf, vol. 89, no. 11,
29 May 1969, pages 580-587; KÖHLER
"Schnellerwärmung von Edelstahl"**

(73) Proprietor: **KAWASAKI STEEL CORPORATION
1-28, Kitahonmachi-Dori 1-Chome
Chuo-ku Kobe-Shi Hyogo 650 (JP)**

(72) Inventor: **Shimizu, Yoh c/o Research
Laboratories
Kawasaki Steel Corporation 1, Kawasaki-Cho
Chiba City (JP)**
Inventor: **Nishide, Teruyuki c/o Research
Laboratories
Kawasaki Steel Corporation 1, Kawasaki-Cho
Chiba City (JP)**

(74) Representative: **Overbury, Richard Douglas et al
HASELTINE LAKE & CO Hazlitt House 28
Southampton Buildings Chancery Lane
London WC2A 1AT (GB)**

## Description

This invention relates to a method of manufacturing a grain-oriented silicon steel sheet having excellent magnetic properties in the rolling direction. More particularly, it relates to a method of heating a silicon steel slab used as the starting material for the silicon steel sheet which method advantageously solves problems hitherto attendant to the necessary high-temperature heating.

As is well-known, a grain-oriented silicon steel sheet is composed of secondary recrystallisation grains where the (110) plane is oriented in the sheet surface and the [001] axis is oriented in the rolling direction. Therefore, it is important to selectively grow crystal grains of such an orientation during the final high temperature box annealing. For this purpose, it is necessary that so-called inhibitors such as MnS, MnSe, AlN and the like disperse uniformly and suppress the growth of crystal grains other than the secondary crystal grains so as to selectively grow the secondary recrystallisation grain of (110)[001] orientation prior to the finish annealing.

It is already well-known that the above dispersion is controlled by dissolving the precipitated inhibitors to form a solid solution during the heating of the slab prior to the hot rolling and then subjecting the slab to hot rolling according to a proper cooling pattern.

For this purpose, the heating of the slab is usually performed at an elevated temperature above 1,300°C. For example, such a technique is described in US-A-4 202 711 wherein a grain oriented silicon iron sheet is produced by reheating a cast slab to a temperature of from 1,330 to 1,400°C prior to hot rolling, cold rolling and annealing. In such techniques it is common to heat the outer surface of the slab at a temperature of not less than 1,350°C in order to ensure that sufficient heat is conducted to the central portion of the slab. In this case, the greater amount of molten scale produced not only impairs the operability of the heating furnace but also causes many problems such as surface defects due to oxidation of grain boundaries, the occurrence of edge cracks, and the like.

In order to solve the above drawbacks, there have been proposed various methods wherein the heating is carried out at low temperature by varying the amount of ingredients contained in steel. For instance, Japanese Patent laid open No. 58-100,627 discloses that the amount of inhibitor and the C content in the steel material are decreased to lower the slab reheating temperature, and Japanese Patent laid open No. 50-160,120 discloses that the dissolution product of Mn content x S content in the steel material is decreased to lower the solid solution limit of MnS for performing low-temperature heating.

However, these methods do not provide a complete solution and have not yet been adopted on an industrial scale because the reduction of the inhibitor amount does not stabilise the magnetic properties and also the decrease of the Mn content frequently produces edge cracking and surface defects even after low-temperature heating of the slab.

On the other hand, the inventors have found that when the conventional slab heating surface of the gas-fired type is used together with a slab induction heating furnace to reduce the temperature difference between the slab surface temperature and the slab centre temperature in the high-temperature range, various problems which usually occur when heating the slab surface at an excessively high temperature can advantageously be solved and also the energy-saving and quality can be improved remarkably.

With regard to the application of induction heating to the slab, there are some reports of such a technique, for example, in Japanese Patent Application Publication No. 44-15,047, No. 52-47,179 and the like. The former report is concerned with the control of optimum energy during multiple heating with a gas annealing furnace, while the latter report discloses a method of preventing the temperature drop of the slab end during induction heating.

In addition, there have been some proposals relating to slab induction heating furnaces. Among them, however, only the proposal disclosed in Japanese Patent Application Publication No. 47-14,627 (corresponding to GB-A-1 244 439) is applied to the heating of a slab for grain-oriented silicon steel, wherein the slab for the grain-oriented silicon steel is heated at 1,250-1,300°C in a gravity charging furnace (or a heating furnace of the pusher type) and subsequently heated at a higher temperature of 1,350-1,400°C by an electrical means such as induction heating or resistance heating to improve the magnetic properties. In this case, the induction heating of the slab at the high temperature of 1,350-1,400°C without controlling the atmosphere is effective for the improvement of the magnetic properties, but produces a fairly large amount of slag on the surface of the slab even with a short heating time, resulting in not only the impairing of the furnace operation but also the occurrence of surface defects. Further, when the slab containing carbon in no more than a given amount is heated until the above heating temperature reaches the centre of the slab, the crystal grains in the slab are coarsened to leave coarse extended grains in the hot rolled sheet, which then turn into fine grain streaks in the finished product and cause local degradation of magnetic properties.

It is, therefore, an object of the invention to provide a method of more advantageously induction-heating a slab for silicon steel containing at least one of MnS, MnSe and AlN as inhibitor without producing the aforementioned problems.

According to the present invention there is provided a method of manufacturing a grain-oriented silicon steel sheet having mainly an orientation of (110)[001] which method comprises

(i) providing a silicon steel slab containing 2.0 to 4.5% by weight of silicon, 0.02 to 0.10% by weight of manganese, 0.005 to 0.06% by weight in total of at least one element selected from sulphur, selenium and aluminium, 0.030 to 0.080% by weight of carbon and up to 0.2% by weight in total of at least one element selected from antimony, nickel and molybdenum;

(ii) heating said silicon steel slab in a slab heating furnace of the gas fired type until the temperature of the central portion of the slab which exhibits the smallest temperature increase during the heating reaches 900-1,230°C,

(iii) placing the slab in an induction heating furnace before the temperature of said central portion becomes less than 900°C and then heating the slab in an inert gas atmosphere containing not more than 1% of oxygen so as to maintain the temperature of said central portion at 1,250-1,380°C for not less than 10 minutes and to maintain the temperature of the slab surface at not less than 1250°C,

(iv) hot rolling the slab to form a sheet of thickness of 1.4-3.5 mm,

(v) cold rolling the sheet in one-step or in two-steps inclusive of an intermediate annealing to obtain a sheet of finished thickness of 0.15-0.50 mm, and

(vi) subjecting the sheet to decarburisation annealing and a subsequent high temperature box annealing.

Preferably, the slab is heated in the gas fired slab heating furnace until the temperature of said central portion reaches 1,000-1,230°C. Also, it is preferred for the heating in the slab induction heating furnace to be such that the temperature of said central portion is held at 1,250-1,350°C for not less than 10 minutes.

In a preferred embodiment, the slab is placed in the slab induction heating furnace before the temperature of said central portion is less than 1000°C.

For a better understanding of the invention and to show how the same may be carried out, reference will now be made, by way of example, to the accompanying drawings, in which:-

Fig. 1 is a graph showing the relationship between the centre temperature (°C) of a slab in a soaking pit and the magnetic flux density $B_{10}$(T) of the finished product when the slab is heated in an induction heating furnace; and

Fig. 2 is a graph showing the influence of the surface temperature (°C) of the slab and the $O_2$ content (%) in the furnace atmosphere on the oxidation loss (%) before and after the heating of the slab in the induction heating furnace.

The slab used in accordance with the invention may be obtained by continuous casting or blooming a steel ingot.

The reason for the limitation on the composition of the slab is as follows.

Silicon is added for enhancing the specific resistance of the steel sheet and reducing the watt loss thereof. When the amount of Si is less than 2.0%, the crystal orientation is damaged at the finish high-temperature annealing due to α - γ transformation. The upper limit of 4.5% is determined from the viewpoint of cold rollability.

The lower limit of 0.005% on the total amount of S, Se and Al is the minimum amount required for developing a finely dispersed inhibitor in the steel in the form of MnS, MnSe and AlN. The reason why the upper limit is 0.060% is based on the fact that, when the total amount of these elements exceeds 0.060%, heating at a temperature higher than that required in accordance with the invention has to be effected for dissolving the above precipitates during the heating of the slab so as to utilise them as an inhibitor and this is inconsistent with an object of the invention which is to lower the heating temperature as far as possible.

As to the amount of Mn, the lower limit of 0.02% is required for forming the inhibitor as described above, while the upper limit of 0.1% is required so as not to require the heating temperature of the slab to be raised in order to form the solid solution of MnS and MnSe.

The addition of C is to make the crystal structure uniform by utilising the α - γ transformation during the hot rolling. For this purpose, it is necessary to add C in an amount of at least 0.030%, which makes it possible to improve the hot rolled crystal structure even if the coarsening of crystal grains is caused by raising the slab temperature up to 1,380°C. On the other hand, the upper limit of 0.080% is required to possibly limit decarburisation in subsequent steps.

Moreover, it is known that an intergranular segregation type element such as Sn, As, Pb, Bi, Cu or the like and an element forming a nitride such as BN, VN or the like can be also contained in the slab as an inhibitor. In this connection, the invention does not impair the improving effect on quality produced by the addition of these elements, so that the above elements may be included in accordance with the invention.

According to the invention, it is an important feature that the slab containing the above mentioned elements is first heated in a slab heating furnace of the conventional gas fired type until the centre temperature of the slab reaches 900-1,230°C, is taken out from this furnace and is then placed in a slab induction heating furnace before the slab centre temperature is less than 900°C (preferably less than 1000°C) where the slab is heated so as to maintain the slab centre temperature at 1,250-1,380°C for not less than 10 minutes. The term "slab centre temperature" used herein means the temperature of that central portion of the slab which exhibits the smallest temperature increase during the heating and does not necessarily mean the temperature of the centre of the slab thickness. In general, it is difficult to raise the temperature of the central portion of the slab so that controlling the temperature of the coldest point of the slab to be within the above defined range is important to stabilise the magnetic properties of the finished product. Moreover, the measurement of the slab centre temperature is carried out by piercing a hole of 8 mm in diameter from the surface of the slab and inserting the top of a platinum or platinum-rhodium thermocouple coated with an insulator into the central portion of the slab.

The reason why the slab centre temperature in the gas fired slab heating furnace used for the preliminary heating of the slab is limited to 900-1,230°C is based on the fact that when the slab centre temperature is less than 900°C, a long time is needed to raise the temperature to the predetermined value in the subsequent induction heating furnace and the energy cost becomes higher while when it exceeds 1,230°C, a large amount of slag is produced because this temperature exceeds the melting point of fayalite present as a surface layer oxide.

Further, the slab centre temperature when charging the slab into the induction heating furnace is restricted to not less than 900°C in view of the energy cost. Moreover, the reason why the slab centre temperature during the heating by the induction heating furnace is limited to 1,250-1,380°C is as follows.

As previously mentioned, a high temperature heating of the slab is necessary for the solid solubilisation of the inhibitor. From this point, the lower limit is determined as that needed for the necessary amount of MnS, MnSe and AlN inhibitor to form a solid solution in dependence upon the amounts of MnS, MnSe and AlN contained in the steel. On the other hand, when the slab heating temperature is too high, the occurrence of fine grain streaks in the finished product, due to the coarsening of crystal grains in the slab, degrades the magnetic properties of the product and, further, energy cost increases and this determines the upper limit.

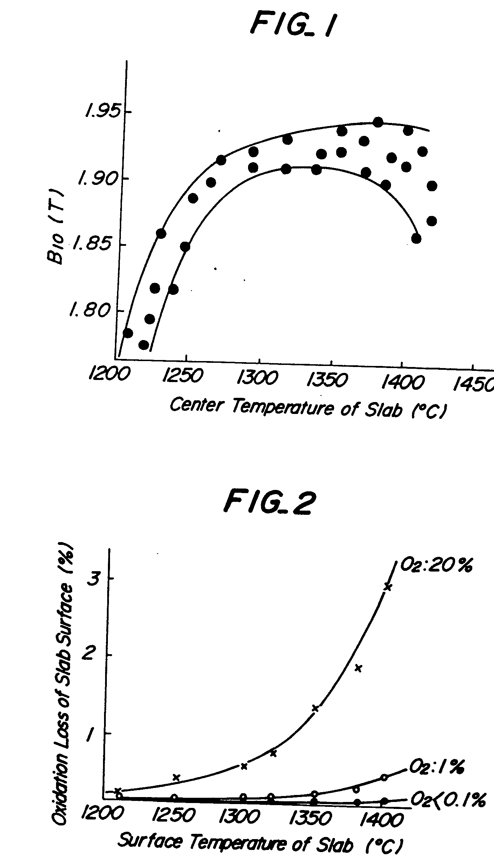

Fig. 1 shows appropriate heating temperatures at the central portion of the slab in the induction heating furnace. The magnetic flux density of the finished product is shown in relation to the slab centre temperature during soaking in the slab induction heating furnace. In this case, the finished product is obtained by heating a 3.5% silicon steel slab containing 0.022% of Se, 0.08% of Mn and 0.025% of Sb as an inhibitor by means of the combination of a gas fired type slab heating furnace and a slab induction heating furnace according to the invention, hot rolling it into a hot coil having a thickness of 2.5 mm and then cold rolling according to the conventional two step process to obtain a steel sheet having a thickness of 0.30 mm. Particularly, the slab is held at the soaking temperature for 10-15 minutes.

It will be understood from Fig. 1 that a magnetic flux density of $B_{10} \geqq 1.89T$ is stably obtained when the heating temperature in the central portion of the slab is within a range of 1,250-1,380°C.

Moreover, when a silicon steel slab having the aforementioned chemical composition is heated at a temperature above 1,350°C, the occurrence of slag may be caused. In order to allow a heating temperature of up to 1,380°C, it is desirable that the silicon steel slab further contains 0.010-0.20% in total of at least one element selected from Sb, Ni and Mo.

Sb, Ni and Mo are elements effective for the prevention of oxidation. In this regard, it is necessary to add these elements in a total amount of at least 0.010% for preventing the oxidation of the slab surface during the slab heating or after it has been taken out of the heating furnace. On the other hand, the upper limit of 0.2% is mainly required from the viewpoint of cost.

Fig. 2 shows the change in oxidation loss in dependence on the oxygen content in the atmosphere used during induction heating and the surface temperature during the slab heating. The oxidation loss is measured by heating the silicon steel slab having the same composition as mentioned above in the gas fired type slab heating furnace until the slab centre temperature reaches 1,150°C according to the invention, and then heating it in the slab induction heating furnace for 20-40 minutes until the surface temperature of the slab reaches the value shown in Fig. 2 and further holding such a surface temperature for 10 minutes.

It will be understood from Fig. 2 that the oxidation loss can considerably be reduced when the $O_2$ content in the heating atmosphere is restricted to not more than 1% at a slab surface temperature of not less than 1,250°C.

The steps following the hot rolling of the slab heated under the conditions according to the invention are the same as those conventionally used for the manufacture of grain-oriented silicon steel sheets. Thus, grain-oriented silicon steel sheet having a thickness of 0.15-0.50 mm can be manufactured by performing one or two-step cold rolling inclusive of an intermediate annealing in accordance with the amount and kind of the inhibitor, decarburisation annealing and high-temperature box annealing in this order.

Example 1

A silicon steel slab containing 3.24% of Si, 0.075% of Mn and 0.025% of S and having a thickness of 220 mm and a weight of about 8 tons, which was produced by continuous casting, was subjected to such a heating treatment prior to hot rolling that, after a thermocouple was inserted into the central portion of the slab in the thickness direction, the slab was first heated in a gas fired type slab heating furnace for 2 hours until the slab centre temperature reached 1,200°C, and then immediately heated in a slab induction heating furnace until the slab centre temperature reached 1,310°C in about 20 minutes and the latter temperature was held for 15 minutes. Thereafter, the thus heated slab was subjected to hot rolling to form a hot rolled steel sheet having a thickness of 2.5 mm.

Next, the hot rolled steel sheet was pickled to remove an oxide layer from the surface of the sheet, cold rolled to an intermediate thickness of 0.65 mm, subjected to intermediate annealing in a mixed gas atmosphere of hydrogen and nitrogen at 900°C for 3 minutes, and cold rolled to a finished thickness of 0.30 mm.

Thereafter, the cold rolled sheet was subjected to decarburisation annealing in a wet hydrogen atmosphere at 800°C for 3 minutes, coated with MgO as an annealing separator, and subjected to box annealing in a hydrogen atmosphere at 1,200°C for 10 hours.

The thus obtained coil product had magnetic properties of W 17/50; $1.12\pm0.01$ W/kg and $B_{10}$; $1.88\pm0.005$T as measured at five positions in the longitudinal direction of the coil, which had little scattering of the magnetic properties as in the case of a conventional grain-oriented silicon steel.

Example 2

A continuously cast silicon steel slab containing 2.95% of Si, 0.81% of Mn, 0.020% of S, 0.022% of Al and 0.0075% of N and having a thickness of 220 mm was heated in a gas fired type slab heating furnace for about 2 hours until the slab centre temperature reached 1,150°C as determined by a thermocouple inserted into the central portion of the slab in the thickness direction. The slab was taken out therefrom and then placed in a slab induction heating furnace after an interval of 3 minutes. At this time, the slab centre temperature was 1,145°C.

Then, the slab was heated in the slab induction heating furnace in $N_2$ gas atmosphere until the slab centre temperature reached 1,330°C and held at the same temperature for 10 minutes. Thereafter, the slab was hot rolled to a thickness of 2.3 mm.

The thus hot rolled steel sheet was subjected to a normalising treatment at 1,100°C for 3 minutes, cold rolled in one-step to a finished thickness of 0.30 mm, subjected to decarburisation annealing at 800°C for 3 minutes, coated with MgO, and then subjected to box annealing in a hydrogen atmosphere at 1,200°C for 10 hours. The thus obtained grain-oriented silicon steel sheet coil was a silicon steel having a high magnetic flux density of W 17/50; $1.03\pm0.02$ W/kg and $B_{10}$; $1.93\pm0.008$T as measured at five positions in the longitudinal direction of the coil.

By means of the invention, grain-oriented silicon steel sheets with high quality can be manufactured by advantageously suppressing damage in the heating furnace due to high temperature heating of the silicon steel slab.

Example 3

A continuously cast silicon steel slab containing 3.28% of Si, 0.048% of C, 0.075% of Mn, 0.025% of Se, 0.035% of Sb and 0.05% of Ni and having a thickness of 220 mm was heated in a gas fired type slab heating furnace for about 1.5 hours until the slab centre temperature reached 1,000°C as determined by a thermocouple inserted into the central portion of the slab in the thickness direction. The slab was taken out therefrom and then placed in a slab induction heating furnace after an interval of 3 minutes. In this case, the slab centre temperature was 994°C.

Then, the slab was heated in the slab induction heating furnace in $N_2$ gas atmosphere till the slab centre temperature reached 1,360°C and was held at the same temperature for 15 minutes. Thereafter, the slab was hot rolled to a thickness of 2.0 mm.

The thus hot rolled steel sheet was subjected to a normalising treatment at 1,000°C for 1 minute, cold rolled to a thickness of 0.60 mm, subjected to an intermediate annealing at 1,000°C for 1 minute, and again cold rolled to a finished thickness of 0.23 mm. The thus cold rolled sheet coil was subjected to decarburisation annealing in a wet hydrogen atmosphere at 800°C for 3 minutes, coated with MgO and then subjected to box annealing in a hydrogen atmosphere at 1,200°C for 10 hours. The thus obtained grain-oriented silicon steel sheet coil was a silicon steel having a high magnetic flux density of W 17/50; $0.84\pm0.02$ W/kg and $B_{10}$; $1.92\pm0.004$T as measured at five positions in the longitudinal direction of the coil.

**Claims**

1. A method of manufacturing a grain-oriented silicon steel sheet having mainly an orientation of (110)[001] which method comprises

(i) providing a silicon steel slab containing 2.0 to 4.5% by weight of silicon, 0.02 to 0.10% by weight of manganese, 0.005 to 0.06% by weight in total of at least one element selected from sulphur, selenium and aluminium, 0.030 to 0.080% by weight of carbon and up to 0.2% by weight in total of at least one element selected from antimony, nickel and molybdenum;

(ii) heating said silicon steel slab in a slab heating furnace of the gas fired type until the temperature of the central portion of the slab which exhibits the smallest temperature increase during the heating reaches 900-1,230°C,

(iii) placing the slab in an induction heating furnace before the temperature of said central portion becomes less than 900°C and then heating the slab in an inert gas atmosphere containing not more than 1% of oxygen so as to maintain the temperature of said central portion at 1,250-1,380°C for not less than 10 minutes and to maintain the temperature of the slab surface at not less than 1250°C,

(iv) hot rolling the slab to form a sheet of thickness of 1.4-3.5 mm,

(v) cold rolling the sheet in one-step or in two-steps inclusive of an intermediate annealing to obtain a sheet of finished thickness of 0.15-0.50 mm, and

(vi) subjecting the sheet to decarburisation annealing and a subsequent high temperature box annealing.

2. A method according to claim 1, wherein said slab is heated in the gas fired slab heating furnace until the temperature of said central portion reaches 1,000-1,230°C, the slab is placed in the slab induction heating furnace before the temperature of said central portion is less than 1,000°C, and the slab is heated in the slab induction heating furnace so as to maintain the temperature of said central portion at 1,250-1,350°C for not less than 10 minutes.

## Patentansprüche

1. Verfahren zur Herstellung von einem kornorientierten Blech aus Siliciumstahl mit hauptsächlich einer Orientierung von (110) [001], umfassend

(i) die Bereitstellung eines Siliciumstahl-Slabs, der enthält 2,0 bis 4,5 Gew.-% Silicium, 0,02 bis 0,10 Gew.-% Mangan, insgesamt 0,005 bis 0,06 Gew.-% wenigstens eines Elements ausgewählt aus Schwefel, Selen und Aluminium, 0,030 bis 0,080 Gew.-% Kohlenstoff und bis zu insgesamt 0,2 Gew.-% wenigstens eines Elements ausgewählt aus Antimon, Nickel und Molybdän,

(ii) das Erhitzen des Siliciumstahl-Slabs in einem gasbetriebenen Slab-Erhitzungsofen bis die Temperatur in der Hauptmenge des Slabs, die den geringsten Temperaturanstieg während des Erhitzens zeigt, 900 bis 1230°C erreicht,

(iii) das Einbringen des Slabs in einen durch Induktion erhitzten Ofen vor dem Absinken der Temperatur in der Hauptmenge auf unter 900°C und Erhitzen des Slabs in einer inerten Gasatmosphäre, die nicht mehr als 1% an Sauerstoff enthält, wobei die Temperatur in der Hauptmenge bei 1250 bis 1380°C während nicht weniger als 10 Minuten gehalten wird und die Temperatur an der Oberfläche des Slabs nicht weniger als 1250°C beträgt,

(iv) das Heißwalzen des Slabs zur Bildung eines Blechs mit einer Dicke von 1,4 bis 3,5 mm,

(v) das Kaltwalzen des Blechs in einer Stufe oder in zwei Stufen einschließlich eines Zwischenglühens zur Gewinnung des Blechs mit einer Enddicke von 0,15 bis 0,50 mm und

(vi) die Nachbehandlung des Blechs durch Entkohlungsglühen und anschließendes Kastenglühen.

2. Verfahren gemäß Anspruch 1, bei dem der Slab in dem gasbetriebenen Slab-Erhitzungsofen solange erhitzt wird, bis die Temperatur in der Hauptmenge 1000 bis 1230°C erreicht hat, der Slab in einen durch Induktion erhitzten Ofen vor dem Absinken der Temperatur in der Hauptmenge auf unter 1000°C eingebracht wird und der Slab in diesem Ofen so erhitzt wird, daß die Temperatur der Hauptmenge bei 1250 bis 1350°C während nicht weniger als 10 Minuten gehalten wird.

## Revendications

1. Procédé de fabrication d'une tôle d'acier au silicium à grains orientés ayant principalement une orientation de (110)[001], ce procédé comprenant les étapes qui consistent à:

(i) préparer une brame d'acier au silicium contenant 2,0 à 4,5% en poids de silicium, 0,02 à 0,10% en poids de manganèse, 0,005 à 0,06% en poids au total d'au moins un élément choisi parmi le soufre, le sélénium et l'aluminium, 0,030 à 0,080% en poids de carbone et jusqu'à 0,2% en poids au total d'au moins un élément choisi parmi l'antimoine, le nickel et le molybdène;

(ii) chauffer cette brame d'acier au silicium dans un four de chauffage de brames du type à combustion de gaz, jusqu'à ce que la température de la partie centrale de la brame, qui présente l'augmentation de température la plus faible au cours du chauffage, atteigne 900-1230°C,

(iii) placer la brame dans un four à chauffage par induction avant que la température de ladite partie centrale devienne inférieure à 900°C, puis chauffer la brame dans une atmosphère de gaz inerte ne contenant pas plus de 1% d'oxygène, de manière à maintenir la température de cette partie centrale à 1250-1380°C pendant pas moins de 10 minutes et à maintenir la température de la surface de la brame à une valeur non inférieure à 1250°C,

(iv) laminer à chaud la brame pour former une tôle d'une épaisseur de 1,4-3,5 mm,

(v) laminer à froid la tôle en une étape ou en deux étapes incluant un recuit intermédiaire pour obtenir une tôle d'épaisseur finie 0,15-0,50 mm, et

(vi) soumettre la tôle à un recuit de décarburation et ensuite à un recuit en vase clos à haute température.

2. Procédé selon la revendication 1, dans lequel ladite brame est chauffée dans le four de chauffage de brames à combustion de gaz jusqu'à ce que la température de ladite partie centrale atteigne 1000-1230°C, la brame est placée dans le four de chauffage de brames par induction avant que la température de ladite partie centrale soit inférieure à 1000°C et la brame est chauffée dans le four de chauffage de brames par induction de manière à ce que la température de ladite partie centrale soit maintenue à 1250-1350°C pendant pas moins de 10 minutes.

## FIG. 1

B10 (T) vs Center Temperature of Slab (°C)

## FIG. 2

Oxidation Loss of Slab Surface (%) vs Surface Temperature of Slab (°C)

O₂:20%
O₂:1%
O₂<0.1%